(19) Europäisches Patentamt
European Patent Office
Office européen des brevets

(11) EP 4 306 591 A1

(12) **EUROPEAN PATENT APPLICATION**
published in accordance with Art. 153(4) EPC

(43) Date of publication:
**17.01.2024 Bulletin 2024/03**

(21) Application number: **22766688.0**

(22) Date of filing: **03.02.2022**

(51) International Patent Classification (IPC):
***C08K 7/14*** (2006.01) ***C08L 81/02*** (2006.01)
***C08J 5/00*** (2006.01) ***C08K 3/04*** (2006.01)
***C08K 3/26*** (2006.01) ***C08K 3/34*** (2006.01)

(52) Cooperative Patent Classification (CPC):
**C08J 5/00; C08K 3/04; C08K 3/26; C08K 3/34; C08K 7/14; C08L 81/02**

(86) International application number:
**PCT/JP2022/004169**

(87) International publication number:
**WO 2022/190723 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2021 JP 2021037197**

(71) Applicant: **DIC CORPORATION**
**Itabashi-ku**
**Tokyo 174-8520 (JP)**

(72) Inventors:
- **KUROKAWA Ryuhei**
  **Ichihara-shi, Chiba 290-8585 (JP)**
- **NEGISHI Hiroaki**
  **Ichihara-shi, Chiba 290-8585 (JP)**

(74) Representative: **Kraus & Weisert Patentanwälte PartGmbB**
**Thomas-Wimmer-Ring 15**
**80539 München (DE)**

# (54) POLYARYLENE SULFIDE RESIN COMPOSITION, MOLDED ARTICLE, AND METHODS RESPECTIVELY FOR PRODUCING SAID POLYARYLENE SULFIDE RESIN COMPOSITION AND MOLDED ARTICLE

(57) Provided are a PAS resin molded article which comprises a polyarylene sulfide (PAS) resin, a glass fiber, a particulate filler, and graphite, and which has not only excellent thermal conductivity and mechanical properties but also excellent fuel barrier properties, a PAS resin composition which can provide the molded article, and a method for producing the PAS resin molded article as well as a method for producing the PAS resin composition. More specifically, provided are a PAS resin composition comprising a PAS resin (A), a glass fiber (B), a particulate filler (C), and graphite (D) blended as essential components, in which the PAS resin (A) has a sodium content in the range of 2,300 ppm or less, and in which, relative to 100 parts by mass of the PAS resin (A), the amount of the glass fiber (B) is in the range of 10 to 150 parts by mass, the amount of the particulate filler (C) is in the range of 1 to 120 parts by mass, and the amount of the graphite (D) is in the range of 10 to 130 parts by mass, a molded article, and a method for producing the PAS resin composition as well as a method for producing the molded article.



Processed by Luminess, 75001 PARIS (FR)

## Description

TECHNICAL FIELD

The present invention relates to a polyarylene sulfide resin composition, a polyarylene sulfide resin molded article, and a method for producing the polyarylene sulfide resin composition as well as a method for producing the polyarylene sulfide resin molded article.

BACKGROUND ART

In recent years, engineering plastics having excellent productivity and excellent moldability as well as high heat resistance have been developed, and such plastics are lightweight and can be materials as a substitute for metal materials, and have been widely used as members for electric or electronic devices, automobile, and the like. Particularly, polyarylene sulfide (hereinafter, referred to as "PAS") resins, such as a polyphenylene sulfide (hereinafter, referred to as "PPS") resin, have excellent heat resistance, and further have excellent mechanical strength, chemical resistance, molding processability, and dimensional stability, and therefore have been used in a wide variety of fields, such as the field of automobile parts, and the electric or electronic field.

Further, in the field of automobile parts, the electric or electronic field, and the like, as the output is increased, the amount of heat generated is increased, and to ensure excellent heat radiation properties, a further improvement of the thermal conductivity of the material itself is a task that must be achieved.

Conventionally, as means for improving the heat radiation of a resin molded material, a method of incorporating a filling material having high thermal conductivity into the resin has been known. With respect to the method for improving the thermal conductivity of a PAS resin, for example, there has been proposed a resin composition obtained by incorporating graphite which is a material having high thermal conductivity into a PPS resin (see, for example, PTL 1), and it has been known that a molded article obtained from the resin composition has excellent thermal conductivity and mechanical strength.

Meanwhile, fuel system parts for car are used in a high-temperature environment, and further likely to be in contact with a fuel such as gasoline, and a vapor thereof, and some of or all of the components thereof cause the resin composition used in such a part to swell, leading to problems of a change in dimension and weight and a lowering of the mechanical strength.

For removing the problems, there have been provided a resin composition comprising a PPS resin having a non-Newtonian index of 1.15 or more, a fibrous filler, and a non-fibrous filler blended in amounts in the specific range (see PTL 2), and a resin composition comprising a PPS resin having a peak molecular weight of 34,200 to 100,000 in the molecular weight distribution, a thermoplastic elastomer composed of an acid-modified $\alpha$-olefin copolymer, and an epoxy resin (see PTL 3).

Further, there has been known a resin composition comprising a PPS resin forming a continuous phase, a thermoplastic elastomer composed of a polyolefin resin and a saturated rubbery polymer, at least part of which is dynamically crosslinked, and a compatibilizing agent (see PTL 4).

CITATION LIST

PATENT LITERATURE

PTL 1: JP2004-339290A
PTL 2: JP2008-266616A
PTL 3: JP2004-300272A
PTL 4: JP2006-45401A

SUMMARY OF INVENTION

TECHNICAL PROBLEM

However, by the above-mentioned methods, a resin molded article which achieves both thermal conductivity and low fuel swell properties and further has excellent mechanical properties cannot be obtained.

Accordingly, a task to be achieved by the present invention is to provide a PAS molded article which not only has excellent thermal conductivity and mechanical properties, but also suppresses swelling by a fuel, a PAS resin

composition which can provide the molded article, and a method for producing the PAS molded article as well as a method for producing the PAS resin composition.

SOLUTION TO PROBLEM

The present inventors have conducted extensive and intensive studies with a view toward solving the above-mentioned problems. As a result, it has been found that, by using a PAS resin having a sodium content in the specific range, with a glass fiber, a particulate filler, and graphite in combination, a PAS resin molded article which has not only excellent thermal conductivity and mechanical properties but also excellent fuel barrier properties can be obtained, and the present invention has been completed.

Specifically, the present disclosure is directed to a PAS resin composition comprising a PAS resin (A), a glass fiber (B), a particulate filler (C), and graphite (D) blended as essential components,

in which the PAS resin (A) has a sodium content in the range of 2,300 ppm or less, and
in which, relative to 100 parts by mass of the PAS resin (A), the amount of the glass fiber (B) is in the range of 10 to 150 parts by mass, the amount of the particulate filler (C) is in the range of 1 to 120 parts by mass, and the amount of the graphite (D) is in the range of 10 to 130 parts by mass.

Further, the present disclosure is directed to a molded article which is obtained by molding the above-mentioned PAS resin composition.

Further, the present disclosure is directed to a method for producing a PAS resin composition, the method having the step of blending a PAS resin (A), a glass fiber (B), a particulate filler (C), and graphite (D) as essential components, and melt-kneading the resultant mixture at a temperature in the range of the melting point of the PAS resin (A) or higher,

in which the PAS resin (A) has a sodium content in the range of 2,300 ppm or less, and
in which, relative to 100 parts by mass of the PAS resin (A), the amount of the glass fiber (B) is in the range of 10 to 150 parts by mass, the amount of the particulate filler (C) is in the range of 1 to 120 parts by mass, and the amount of the graphite (D) is in the range of 10 to 130 parts by mass.

Further, the present disclosure is directed to a method for producing a molded article, the method having the step of producing a PAS resin composition by the above-mentioned method, and the step of melt-molding the obtained PAS resin composition.

ADVANTAGEOUS EFFECTS OF INVENTION

By the present disclosure, there can be provided a molded article which comprises a PAS resin, a glass fiber, a particulate filler, and graphite, and which has not only excellent thermal conductivity and mechanical properties but also excellent fuel barrier properties, a PAS resin composition which can provide the molded article, and a method for producing the molded article as well as a method for producing the PAS resin composition.

DESCRIPTION OF EMBODIMENTS

The PAS resin composition of the present disclosure is a PAS resin composition comprising a PAS resin (A), a glass fiber (B), a particulate filler (C), and graphite (D) blended as essential components,

in which the PAS resin (A) has a sodium content in the range of 2,300 ppm or less, and
in which, relative to 100 parts by mass of the PAS resin (A), the amount of the glass fiber (B) is in the range of 10 to 150 parts by mass, the amount of the particulate filler (C) is in the range of 1 to 120 parts by mass, and the amount of the graphite (D) is in the range of 10 to 130 parts by mass. The PAS resin composition is described below.

<PAS Resin (A)>

The PAS resin composition of the present disclosure has a PAS resin blended as an essential component.

The PAS resin has a resin structure in which a structure having an aromatic ring and a sulfur atom bonded to each other constitutes repeating units, specifically, the PAS resin is a resin having a structural site represented by the following general formula (1):

[Chem. 1]

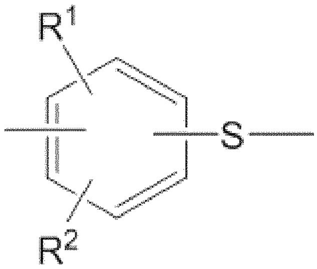

Formula (1)

wherein each of $R^1$ and $R^2$ independently represents a hydrogen atom, an alkyl group having 1 to 4 carbon atoms, a nitro group, an amino group, a phenyl group, a methoxy group, or an ethoxy group
and, if necessary, further a trifunctional structural site represented by the following general formula (2):

[Chem. 2]

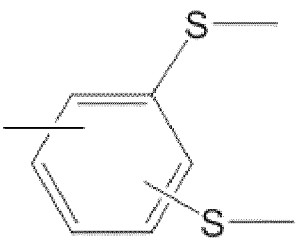

Formula (2)

as repeating units. The amount of the trifunctional structural site represented by the formula (2), based on the total mole of the trifunctional structural site and the other structural sites, is preferably in the range of 0.001 to 3 mol%, especially preferably in the range of 0.01 to 1 mol%.

With respect to the structural site represented by the general formula (1) above, particularly, $R^1$ and $R^2$ in the general formula (1) are preferably a hydrogen atom in view of the mechanical strength of the PAS resin, and, in such a case, there can be mentioned a structural site which is represented by the following formula (3) and is bonded at the para-position, and a structural site which is represented by the following formula (4) and is bonded at the meta-position.

[Chem. 3]

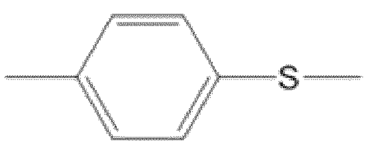

Formula (3)

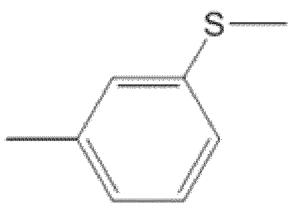

Formula (4)

Of these, particularly, with respect to the bonding of the sulfur atom to the aromatic ring in the repeating units, the structure represented by the general formula (3) above in which the sulfur atom is bonded to the aromatic ring at the para-position is preferred in view of the heat resistance and crystalline properties of the PAS resin.

Further, the PAS resin may contain not only the structural sites represented by the general formulae (1) and (2) above but also structural sites represented by the following structural formulae (5) to (8):

[Chem. 4]

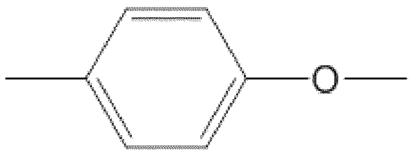

Formula (5)

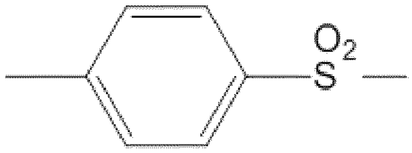

Formula (6)

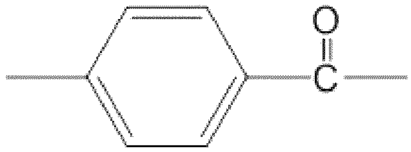

Formula (7)

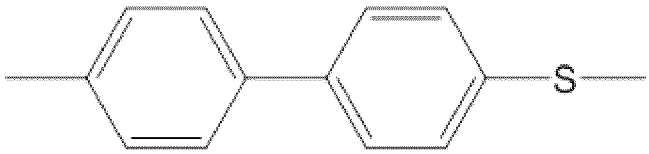

Formula (8)

in an amount of 30 mol% or less of the total of the structural sites represented by the general formula (1) and the general formula (2). Particularly, in the present disclosure, the amount of the structural sites represented by the general formulae (5) to (8) above is preferably 10 mol% or less in view of the heat resistance and mechanical strength of the PAS resin. When the PAS resin contains the structural sites represented by the general formulae (5) to (8) above, the bonding of these sites may be any of a random copolymer and a block copolymer.

Further, the PAS resin may have in the molecular structure thereof a naphthyl sulfide bond or the like, but the amount of the naphthyl sulfide bond or the like, based on the total mole of the naphthyl sulfide bond or the like and the other structural sites, is preferably 3 mol% or less, especially preferably 1 mol% or less.

Further, with respect to the physical properties of the PAS resin, there is no particular limitation as long as the effects of the invention are not sacrificed, but the physical properties of the PAS resin are as follows.

(Melt viscosity)

With respect to the melt viscosity of the PAS resin used in the present disclosure, there is no particular limitation, but, in view of achieving excellent balance between the fluidity and the mechanical strength, the melt viscosity (V6) of the PAS resin, as measured at 300°C, is preferably in the range of 2 Pa•s or more, and preferably in the range of 1,000 Pa•s or less, more preferably in the range of 500 Pa•s or less, further preferably in the range of 200 Pa•s or less. The melt viscosity (V6) is a value of melt viscosity measured using Flowtester, CFT-500D, manufactured by Shimadzu Corporation, with respect to the PAS resin which is maintained at 300°C under a load of $1.96 \times 10^6$ Pa and at L/D = 10 (mm)/1 (mm) for 6 minutes.

(Non-Newtonian index)

With respect to the non-Newtonian index of the PAS resin used in the present disclosure, there is no particular limitation, but the non-Newtonian index of the PAS resin is preferably in the range of 0.90 to 2.00. When a linear PAS resin is used, the non-Newtonian index of the PAS resin is preferably in the range of 0.90 or more, more preferably in the range of 0.95 or more, and preferably in the range of 1.50 or less, more preferably in the range of 1.20 or less. Such a PAS resin has excellent mechanical physical properties, fluidity, and abrasion resistance. In the present disclosure,

the non-Newtonian index (N value) is a value determined by measuring a shear rate (SR) and a shear stress (SS) using Capilograph under conditions such that the temperature is the melting point + 20°C, and the ratio of the orifice length (L) to the orifice diameter (D), i.e., LID is 40, and making a calculation using the formula below. The non-Newtonian index (N value) which is closer to 1 indicates that the PAS resin has a structure that is nearly linear, and the higher non-Newtonian index (N value) indicates that the PAS resin has a structure which is more branched.

[Math. 1]

$$SR = K \cdot SS^N$$

wherein SR represents a shear rate ($second^{-1}$), SS represents a shear stress ($dyn/cm^2$), and K represents a constant.

(Sodium content)

With respect to the PAS resin used in the present disclosure, the content of the sodium atom derived from the raw materials including a sulfidating agent is in the range of 2,300 ppm or less, further preferably in the range of 1,800 ppm or less, especially preferably in the range of 1,600 ppm or less. On the other hand, the lower limit of the sodium concentration is advantageously reduced to the limit of detection or less, but an excessive reduction of the sodium concentration lowers the productivity, and therefore the sodium concentration is preferably in the range of 40 ppm or more, more preferably in the range of 50 ppm or more, especially preferably in the range of 70 ppm or more. The sodium atom content of the PAS resin indicates a sodium atom concentration (in terms of a mass) determined by burning the resin at 500°C and then burning the resultant resin at 530°C for 6 hours, and dissolving the obtained ash in hydrochloric acid and subjecting the resultant solution to measurement by means of an atomic absorption spectrometer, AA-6300 (manufactured by Shimadzu Corporation).

(Molecular weight distribution)

The PAS resin used in the present disclosure preferably has a molecular weight distribution, as determined by gel permeation chromatography using 1-chloronaphthalene as a solvent, which has a peak in the range of 24,000 or more, more preferably a molecular weight distribution which has a peak in the range of 30,000 or more. When the peak molecular weight of the PAS resin is in the above range, an advantage is obtained such that the molecular end amount of the PAS resin is reduced, and thus the sodium content is reduced, and further a resin molded article formed from the PAS resin composition of the invention achieves satisfactory mechanical strength.

(Production method)

With respect to the method for producing the PAS resin, there is no particular limitation, but there can be mentioned, for example, a (method 1) in which a dihalogeno aromatic compound and, if necessary, a polyhalogeno aromatic compound or another copolymerizable component are subjected to polymerization in the presence of sulfur and sodium carbonate, a (method 2) in which a dihalogeno aromatic compound and, if necessary, a polyhalogeno aromatic compound or another copolymerizable component are subjected to polymerization in a polar solvent in the presence of a sulfidating agent or the like, a (method 3) in which p-chlorothiophenol and, if necessary, another copolymerizable component are subjected to self-condensation, and a (method 4) in which a diiodo aromatic compound and sulfur in the form of a simple substance are subjected to melt polymerization in the presence of a polymerization inhibitor optionally having a functional group, such as a carboxyl group or an amino group, under a reduced pressure. Of these methods, the (method 2) is generally used and preferred. In the reaction, for controlling the degree of polymerization, an alkali metal salt of a carboxylic acid or sulfonic acid, or an alkali hydroxide may be added. Particularly preferred is the PAS resin obtained by the (method 2), especially a method in which a water-containing sulfidating agent is introduced into a heated mixture containing an organic polar solvent and a dihalogeno aromatic compound at such a rate that water can be removed from the reaction mixture, and the dihalogeno aromatic compound and the sulfidating agent and, if necessary, a polyhalogeno aromatic compound are added and subjected to reaction in the organic polar solvent while controlling the water content in the reaction system to be in the range of 0.02 to 0.5 mol, relative to 1 mol of the organic polar solvent, producing a PAS resin (see JPH07-228699A), or a method in which a dihalogeno aromatic compound and, if necessary, a polyhalogeno aromatic compound or another copolymerizable component are added, and an alkali metal hydrogensulfide and an organic acid alkali metal salt are subjected to reaction in the presence of an alkali metal sulfide in a solid form and an aprotic polar organic solvent while controlling the alkali metal hydrogensulfide and the

organic acid alkali metal salt to be in the range of 0.01 to 0.9 mol, relative to 1 mol of the sulfur source, and the water content in the reaction system to be in the range of 0.02 mol or less, relative to 1 mol of the aprotic polar organic solvent (see WO2010/058713 pamphlet). Specific examples of dihalogeno aromatic compounds include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and the above compounds each having in the aromatic ring thereof an alkyl group having in the range of 1 to 18 carbon atoms, and examples of polyhalogeno aromatic compounds include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. Further, the halogen atom contained in the above-mentioned compounds is desirably a chlorine atom or a bromine atom.

With respect to the after-treatment method for the reaction mixture containing the PAS resin obtained in the polymerization step, there is no particular limitation, but there can be mentioned, for example, an (after-treatment 1) method in which, after completion of the polymerization reaction, the solvent is first distilled off from the reaction mixture as such, or from the reaction mixture after an acid or a base is added thereto, under a reduced pressure or under atmospheric pressure, and then the solid material obtained after distilling off the solvent is washed with a solvent, such as water, the reaction solvent (or an organic solvent having an equivalent solubility for a low-molecular weight polymer), acetone, methyl ethyl ketone, or an alcohol, once or twice or more, and further subjected to neutralization, washing with water, filtration, and drying, an (after-treatment 2) method in which, after completion of the polymerization reaction, a solvent (a solvent which is soluble in the polymerization solvent used, and which is a poor solvent with respect to at least the PAS), such as water, acetone, methyl ethyl ketone, an alcohol, an ether, a halogenated hydrocarbon, an aromatic hydrocarbon, or an aliphatic hydrocarbon, is added as a precipitant to the reaction mixture to cause the products in the solid state including the PAS and an inorganic salt to precipitate, and the resultant precipitates are subjected to filtration, washing, and drying, an (after-treatment 3) method in which, after completion of the polymerization reaction, the reaction solvent (or an organic solvent having an equivalent solubility for a low-molecular weight polymer) is added to the reaction mixture and the resultant mixture is stirred, and then subjected to filtration to remove the low-molecular weight polymer, and then washed with a solvent, such as water, acetone, methyl ethyl ketone, or an alcohol, once or twice or more, and then subjected to neutralization, washing with water, filtration, and drying, an (after-treatment 4) method in which, after completion of the polymerization reaction, water is added to the reaction mixture and the reaction mixture is washed with water and subjected to filtration and, if necessary, during the washing with water, an acid is added to the reaction mixture for an acid treatment, followed by drying, and an (after-treatment 5) method in which, after completion of the polymerization reaction, the reaction mixture is subjected to filtration and, if necessary, washed with the reaction solvent once or twice or more, and further subjected to washing with water, filtration, and drying. Of these methods, the method of (after-treatment 4) is preferred because metal atoms present at the molecular end of the PAS resin, such as sodium, can be effectively removed, so that the PAS resin having a reduced sodium content can be obtained.

In the after-treatment methods as mentioned in the (after-treatment 1) to (after-treatment 5) above, the PAS resin may be dried in a vacuum or may be dried in air or in an atmosphere of an inert gas, such as nitrogen gas.

<Glass fiber (B)>

The PAS resin composition of the present disclosure has a glass fiber (B) blended as an essential component.

With respect to the raw material for the glass fiber (B) used in the present disclosure, one which those skilled in the art have conventionally known can be used, and the fiber diameter and fiber length and further aspect ratio of the glass fiber and the like can be appropriately selected according to the use of the molded article and the like.

With respect to the glass fiber (B) used in the present disclosure, one which has been processed by a surface treatment agent or a sizing agent can be used. The use of such a glass fiber can advantageously improve the adhesive force to the PAS resin. With respect to the surface treatment agent or sizing agent, there is no particular limitation, and examples include at least one polymer selected from the group consisting of a silane compound having a functional group, such as an amino group, an epoxy group, an isocyanate group, or a vinyl group, a titanate compound, an acrylic resin, a urethane resin, a polyether resin, and an epoxy resin.

With respect to the amount of the glass fiber (B) incorporated, there is no particular limitation as long as the effects of the invention are not sacrificed, but the amount of the glass fiber (B) incorporated, relative to 100 parts by mass of the PAS resin (A), is preferably in the range of 10 parts by mass or more, more preferably 50 parts by mass or more, further preferably 60 parts by mass or more, and preferably in the range of 150 parts by mass or less, more preferably 100 parts by mass or less, further preferably 85 parts by mass or less. When the amount of the fibrous filler incorporated is in the above range, a molded article having excellent molding flowability and mechanical strength can be obtained.

<Particulate filler (C)>

The PAS resin composition of the present disclosure has a particulate filler (C) blended as an essential component. The particulate filler (C) used in the present disclosure excludes the graphite (D).

The particulate filler (C) used in the invention is an essential component for improving the fuel barrier properties and high dimensional accuracy. With respect to the particulate filler (C), there is no particular limitation, and examples include silica, a quartz powder, glass beads, a glass powder, talc (particulate), silicates, such as calcium silicate, aluminum silicate, and diatomaceous earth, metal oxides, such as iron oxide, titanium oxide, zinc oxide, and alumina, metal carbonates, such as calcium carbonate and magnesium carbonate, metal sulfates, such as calcium sulfate and barium sulfate, silicon carbide, silicon nitride, boron nitride, and various metal powders. In the present disclosure, these fillers can be used individually or in combination. Of these, calcium carbonate or talc can be preferably used.

With respect to the range of the average particle diameter ($D_{50}$) of the particulate filler (C) used in the present disclosure, there is no particular limitation, but, from the viewpoint of achieving excellent mechanical strength and fluidity, the upper limit of the average particle diameter is preferably 45 $\mu$m, more preferably 35 $\mu$m, further preferably 30 $\mu$m, especially preferably 25 $\mu$m. On the other hand, from the viewpoint of achieving excellent mechanical strength and thermal conductivity, the lower limit of the average particle diameter is preferably 1 $\mu$m, more preferably 3 $\mu$m. The average particle diameter is an average particle diameter ($D_{50}$) as determined, based on the particle size distribution obtained by measurement according to a general method using a laser diffraction/scattering particle size distribution measurement apparatus (Microtrac MT3300EXII).

In the PAS resin composition of the present disclosure, with respect to the amount of the particulate filler (C) incorporated, there is no particular limitation as long as the effects of the invention are not sacrificed, but the amount of the particulate filler (C) incorporated, relative to 100 parts by mass of the PAS resin (A), is preferably in the range of 1 part by mass or more, more preferably 10 parts by mass or more, further preferably 20 parts by mass or more, and preferably in the range of 120 parts by mass or less, more preferably 60 parts by mass or less, further preferably 45 parts by mass or less. When the amount of the particulate filler (C) is in the above range, an advantage is obtained such that the resin composition has excellent fuel barrier properties and moldability, particularly has release properties, and further a molded article obtained from the resin composition exhibits high dimensional accuracy and low coefficient of linear expansion.

<Graphite (D)>

The PAS resin composition of the present disclosure has graphite (D) blended as an essential component.

Graphite is roughly classified into natural graphite and artificial graphite, and examples of natural graphite include clay graphite, scale graphite, and flake graphite, and any of these kinds of graphite may be used in the present disclosure. The graphite used in the resin composition of the present disclosure is preferably one having a fixed carbon content of 95% or more, more preferably one having a fixed carbon content of 98% or more. Further, the graphite preferably has a crystallinity of 80% or more, more preferably 90% or more. When graphite having a large fixed carbon content and high crystallinity is used, a resin composition having especially excellent thermal conductivity can be obtained.

With respect to the average particle diameter ($D_{50}$) of the graphite (D) used in the present disclosure, there is no particular limitation, but the average particle diameter ($D_{50}$) of primary particles of the graphite (D) is preferably in the range of 0.5 $\mu$m or more, and preferably in the range of 500 $\mu$m or less. When the particle diameter of the graphite (D) is in the above range, a resin composition having especially excellent balance between the fluidity of the composition being melted and the mechanical properties can be obtained. The average particle diameter is an average particle diameter ($D_{50}$) as determined, based on the particle size distribution obtained by measurement according to a general method using a laser diffraction/scattering particle size distribution measurement apparatus (Microtrac MT3300EXII).

With respect to the form of the graphite (D) used in the present disclosure, there is no particular limitation as long as the effects of the invention are not sacrificed, and graphite in any of an indefinite form, a scale form, a flake form, a spherical form, a bead form, and the like may be used, but graphite in a flake form is especially preferred. Further, if necessary, a method may be employed in which the graphite (D) in the above form is subjected to aggregation by compression, a method using a binder, or the like to be processed into the form of flakes or beads, and then the resultant graphite is used in the resin composition.

In the PAS resin composition of the present disclosure, with respect to the amount of the graphite (D) incorporated, there is no particular limitation as long as the effects of the invention are not sacrificed, but the amount of the graphite (D) incorporated, relative to 100 parts by mass of the PAS resin (A), is preferably in the range of 10 parts by mass or more, more preferably 35 parts by mass or more, further preferably 45 parts by mass or more, and preferably in the range of 130 parts by mass or less, more preferably 85 parts by mass or less, further preferably 70 parts by mass or less. When the amount of the graphite (D) is in the above range, an advantage is obtained such that the resin composition has excellent processability, and further a molded article obtained from the resin composition has excellent

fuel barrier properties and thermal conductivity.

In the PAS resin composition of the present disclosure, the total amount of the glass fiber (B), the particulate filler (C), and the graphite (D), relative to 100 parts by mass of the PAS resin (A), is preferably in the range of 21 parts by mass or more, more preferably in the range of 80 parts by weight or more, further preferably in the range of 95 parts by mass or more, especially preferably in the range of 125 parts by mass or more. Further, the total amount of the glass fiber (B), the particulate filler (C), and the graphite (D) is preferably in the range of 400 parts by mass or less, more preferably in the range of 300 parts by mass or less, further preferably in the range of 245 parts by mass or less, especially preferably in the range of 200 parts by mass or less. When the total amount of the glass fiber (B), the particulate filler (C), and the graphite (D) is in the above range, an advantage is obtained such that the resin composition not only has excellent fuel barrier properties and processability but also exhibits excellent mechanical strength.

In the PAS resin composition of the present disclosure, if necessary, a filler other than the glass fiber (B), particulate filler (C), and graphite (D) (hereinafter, frequently referred to as an "additional filler") can be incorporated as an optional component. With respect to the additional filler, any materials that have been known and commonly used can be used as long as the effects of the invention are not sacrificed, and examples include fillers in various forms, e.g., fibrous fillers and non-fibrous fillers, such as a filler in a plate form. Specifically, a fibrous filler, such as a carbon fiber, a ceramic fiber, an aramid fiber, a metal fiber, potassium titanate, a fiber of wollastonite or the like, or a natural fiber, can be used, and a non-fibrous filler, such as glass flakes, a milled fiber, barium sulfate, clay, pyrophyllite, bentonite, sericite, mica, talc, attapulgite, ferrite, calcium silicate, zeolite, or boehmite, can be used.

In the present disclosure, the additional filler is not an essential component, but, when the additional filler is incorporated, with respect to the amount of the additional filler incorporated, there is no particular limitation as long as the effects of the invention are not sacrificed. The amount of the additional filler incorporated, for example, relative to 100 parts by mass of the PAS resin (A), is preferably in the range of 1 part by mass or more, more preferably 10 parts by mass or more, and preferably in the range of 600 parts by mass or less, more preferably 200 parts by mass or less. When the amount of the additional filler is in the above range, an advantage is obtained such that the resin composition exhibits excellent mechanical strength and moldability.

In the PAS resin composition of the present disclosure, if necessary, a silane coupling agent can be incorporated as an optional component. With respect to the silane coupling agent for the PAS resin in the present disclosure, there is no particular limitation as long as the effects of the invention are not sacrificed, but preferred examples include a silane coupling agent having a functional group capable of reacting with a carboxyl group, such as an epoxy group, an isocyanato group, an amino group, or a hydroxyl group. Examples of such silane coupling agents include epoxy group-containing alkoxysilane compounds, such as γ-glycidoxypropyltrimethoxysilane, γ-glycidoxypropyltriethoxysilane, and β-(3,4-epoxycyclohexyl)ethyltrimethoxysilane; isocyanato group-containing alkoxysilane compounds, such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; amino group-containing alkoxysilane compounds, such as γ-(2-aminoethyl)aminopropylmethyldimethoxysilane, γ-(2-aminoethyl)aminopropyltrimethoxysilane, and γ-aminopropyltrimethoxysilane; and hydroxyl group-containing alkoxysilane compounds, such as γ-hydroxypropyltrimethoxysilane and γ-hydroxypropyltriethoxysilane. In the present disclosure, the silane coupling agent is not an essential component, but, when the silane coupling agent is incorporated, with respect to the amount of the silane coupling agent incorporated, there is no particular limitation as long as the effects of the invention are not sacrificed, but, the amount of the silane coupling agent, relative to 100 parts by mass of the PAS resin (A), is preferably in the range of 0.01 parts by mass or more, more preferably 0.1 parts by mass or more, and preferably 10 parts by mass or less, more preferably 5 parts by mass or less. When the amount of the silane coupling agent is in the above range, an advantage is obtained such that the resin composition has excellent corona resistance and moldability, particularly has release properties, and further a molded article obtained from the resin composition exhibits excellent adhesion to an epoxy resin and further has an improved mechanical strength.

In the PAS resin composition of the present disclosure, if necessary, a thermoplastic elastomer can be incorporated as an optional component. Examples of thermoplastic elastomers include a polyolefin elastomer, a fluorine elastomer, and a silicone elastomer, and, of these, a polyolefin elastomer is preferred. When the elastomer is added, with respect to the amount of the elastomer incorporated, there is no particular limitation as long as the effects of the invention are not sacrificed, but the amount of the elastomer incorporated, relative to 100 parts by mass of the PAS resin (A), is preferably in the range of 0.01 parts by mass or more, more preferably 0.1 parts by mass or more, and preferably 10 parts by mass or less, more preferably 5 parts by mass or less. When the amount of the elastomer is in the above range, an advantage is obtained such that the obtained PAS resin composition has an improved impact resistance.

Examples of the polyolefin elastomers include homopolymers of an α-olefin, copolymers of two or more α-olefins, and copolymers of one or two or more α-olefins and a vinyl polymerizable compound having a functional group. In this case, examples of the α-olefins include α-olefins having 2 to 8 carbon atoms, such as ethylene, propylene, and 1-butene. Further, examples of the functional groups include a carboxyl group, an acid anhydride group (-C(=O)OC(=O)-), an epoxy group, an amino group, a hydroxyl group, a mercapto group, an isocyanate group, and an oxazoline group.

Examples of the vinyl polymerizable compounds having a functional group include one or two or more members, e.g., vinyl acetate; α,β-unsaturated carboxylic acids, such as (meth)acrylic acid; α,β-unsaturated carboxylic acid alkyl esters, such as methyl acrylate, ethyl acrylate, and butyl acrylate; α,β-unsaturated carboxylic acid metal salts, such as an ionomer (in which examples of metals include alkali metals, such as sodium, alkaline earth metals, such as calcium, and zinc); α,β-unsaturated carboxylic acid glycidyl esters, such as glycidyl methacrylate; α,β-unsaturated dicarboxylic acids, such as maleic acid, fumaric acid, and itaconic acid; and derivatives (monoester, diester, and acid anhydride) of the α,β-unsaturated dicarboxylic acids. The above-mentioned thermoplastic elastomers may be used individually or in combination.

Further, in the PAS resin composition of the present disclosure, in addition to the above-mentioned components, according to the use of the resin composition, appropriately, a synthetic resin, such as a polyester resin, a polyamide resin, a polyimide resin, a polyether imide resin, a polycarbonate resin, a polyphenylene ether resin, a polysulfone resin, a polyether sulfone resin, a polyether ether ketone resin, a polyether ketone resin, a polyarylene resin, a polyethylene resin, a polypropylene resin, a polyethylene tetrafluoride resin, a polyethylene difluoride resin, a polystyrene resin, an ABS resin, a phenolic resin, a urethane resin, or a liquid crystal polymer (hereinafter, referred to simply as a "synthetic resin"), can be further incorporated as an optional component. In the present disclosure, the synthetic resin is not an essential component, but, when the synthetic resin is incorporated, with respect to the ratio of the synthetic resin incorporated, there is no particular limitation as long as the effects of the invention are not sacrificed, and the ratio of the synthetic resin varies depending on the purpose and cannot be generally defined, but the ratio of the synthetic resin incorporated into the resin composition of the present disclosure, relative to 100 parts by mass of the PAS resin (A), is, for example, in the range of 5 parts by mass or more, and in the range of 15 parts by mass or less. In other words, the ratio of the PAS resin to the total of the PAS resin (A) and the synthetic resin, in terms of a mass, is preferably in the range of (100/115) or more, more preferably in the range of (100/105) or more.

Further, in the PAS resin composition of the present disclosure, an additive known and commonly used, such as a coloring agent, an antistatic agent, an antioxidant, a heat stabilizer, an ultraviolet light stabilizer, an ultraviolet light absorber, a foaming agent, a flame retardant, a flame retardant auxiliary, a rust preventive agent, or a release agent (e.g., a metal salt or an ester of a fatty acid having 18 to 30 carbon atoms, such as stearic acid or montanic acid, or a polyolefin wax, such as polyethylene), may be additionally incorporated as an optional component if necessary. The above additive is not an essential component, and, for example, the amount of the additive, relative to 100 parts by mass of the PAS resin (A), is preferably in the range of 0.01 parts by mass or more, and preferably in the range of 1,000 parts by mass or less, more preferably 100 parts by mass or less, further preferably 10 parts by mass or less, and may be appropriately selected according to the purpose and use so that the effects of the invention are not sacrificed.

The method for producing a PAS resin composition of the present disclosure is a method for producing a PAS resin composition, the method having the step of blending a PAS resin (A), a glass fiber (B), a particulate filler (C), and graphite (D) as essential components, and melt-kneading the resultant mixture at a temperature in the range of the melting point of the PAS resin (A) or higher,

in which the PAS resin (A) has a sodium content in the range of 2,300 ppm or less, and
in which, relative to 100 parts by mass of the PAS resin (A), the amount of the glass fiber (B) is in the range of 10 to 150 parts by mass, the amount of the particulate filler (C) is in the range of 1 to 120 parts by mass, and the amount of the graphite (D) is in the range of 10 to 130 parts by mass. The method is described below in detail.

The method for producing a PAS resin composition of the present disclosure has the step of blending the above-mentioned essential components, and melt-kneading the resultant mixture at a temperature in the range of the melting point of the PAS resin (A) or higher. More specifically, the PAS resin composition of the present disclosure is obtained by blending the essential components and, if necessary, an additional optional component. With respect to the method for producing the resin composition used in the present disclosure, there is no particular limitation, but there can be mentioned a method in which the essential components and, if necessary, an optional component are blended and melt-kneaded, more specifically, a method in which, if necessary, the mixture is uniformly dry-blended by a tumbler, a Henschel mixer, or the like, and then charged into a twin-screw extruder and melt-kneaded.

The melt-kneading can be conducted by heating to a temperature in such a range that the resin temperature becomes the melting point of the PAS resin (A) or higher, preferably to a temperature in such a range that the resin temperature becomes the melting point of the PAS resin + 10°C or higher, more preferably to a temperature in such a range that the resin temperature becomes the melting point of the PAS resin + 10°C or higher, further preferably the melting point of the PAS resin + 20°C or higher, and preferably the melting point of the PAS resin + 100°C or lower, more preferably the melting point of the PAS resin + 50°C or lower.

With respect to the melt-kneader, from the viewpoint of the dispersibility and productivity, a twin-screw kneading extruder is preferred, and, for example, it is preferred that melt-kneading is performed while appropriately controlling the discharge rate of the resin component to be in the range of 5 to 500 (kg/hr) and the screw revolution speed to be in the

range of 50 to 500 (rpm), and it is further preferred that melt-kneading is performed under conditions such that the ratio of the discharge rate to the screw revolution speed (discharge rate/screw revolution speed) is in the range of 0.02 to 5 (kg/hr/rpm). Further, addition to the melt-kneader and mixing of all the components may be performed at the same time, or may be dividedly perfomed. For example, with respect to the above-mentioned components, in the case of adding the glass fiber (B) as an essential component and optionally an additional fibrous filler, it is preferred that the glass fiber and fibrous filler are charged into the twin-screw kneading extruder from the side feeder of the extruder from the viewpoint of the dispersibility. With respect to the position of the side feeder, the ratio of the distance between the extruder resin charge portion (top feeder) and the side feeder to the whole length of the screw of the twin-screw kneading extruder is preferably 0.1 or more, more preferably 0.3 or more. Further, the ratio is preferably 0.9 or less, more preferably 0.7 or less.

The PAS resin composition of the present disclosure obtained by melt-kneading as mentioned above is a melt-kneaded mixture containing the essential components and an optional component added if necessary and a component derived therefrom. Therefore, the PAS resin composition of the present disclosure has a morphology such that the PAS resin (A) forms a continuous phase and the other essential components and an optional component or components are dispersed. With respect to the PAS resin composition of the present disclosure, it is preferred that, after the melt-kneading, the resin composition in a molten state is extruded by a known method, for example, into a strand form, and then processed into a form of pellet, chip, granule, powder, or the like, and, if necessary, predried at a temperature in the range of 100 to 150°C.

The molded article of the present disclosure is obtained by melt-molding the PAS resin composition. Further, the method for producing a molded article of the present disclosure has the step of melt-molding the above-mentioned PAS resin composition. Therefore, the molded article of the present disclosure has a morphology such that the PAS resin (A) forms a continuous phase and the other essential components and an optional component or components are dispersed. The PAS resin composition has such a morphology, and therefore a molded article having excellent fuel barrier properties, thermal conductivity, and mechanical strength can be obtained.

The PAS resin composition of the present disclosure can be subjected to various molding methods, for example, injection molding, compression molding, extrusion, such as composite extrusion, sheet extrusion, or pipe extrusion, pultrusion, blow molding, or transfer molding, but particularly, the PAS resin composition has excellent release properties and therefore is suitable for the injection molding application. When the PAS resin composition is molded by injection molding, with respect to the molding conditions, there is no particular limitation, and molding can be performed by a general method. For example, the method may have the step of melting the PAS resin composition in an injection molding machine at a temperature in such a range that the resin temperature becomes the melting point of the PAS resin (A) or higher, preferably at a temperature in such a range that the resin temperature becomes the melting point of the PAS resin + 10°C or higher, more preferably at a temperature in such a range that the resin temperature becomes the melting point of the PAS resin + 10°C to the melting point of the PAS resin + 100°C, further preferably at a temperature in such a range that the resin temperature becomes the melting point of the PAS resin + 20 to the melting point of the PAS resin + 50°C, and then injecting the resultant resin composition into a mold from the resin discharge outlet, performing molding. In this instance, the range of the mold temperature may be set to be in a known temperature range of, for example, room temperature (23°C) to 300°C, preferably 130 to 190°C.

The method for producing a molded article of the present disclosure may have the step of subjecting the molded article to annealing treatment. With respect to the annealing treatment, optimum conditions for the treatment are selected according to the use or form of the molded article or the like, but the annealing temperature is in the range of the glass transition temperature of the PAS resin (A) or higher, preferably in the range of the glass transition temperature of the PAS resin + 10°C or higher, more preferably in the range of the glass transition temperature of the PAS resin + 30°C or higher. On the other hand, the annealing temperature is preferably in the range of 260°C or lower, more preferably in the range of 240°C or lower. With respect to the annealing time, there is no particular limitation, but the annealing time is preferably in the range of 0.5 hours or more, more preferably in the range of one hour or more. On the other hand, the annealing time is preferably in the range of 10 hours or less, more preferably in the range of 8 hours or less. When the annealing time is in the above range, an advantage is obtained such that the obtained molded article has reduced strain, and further the resin is not only improved in the crystalline properties but also further improved in the thermal conductivity, mechanical properties, and fuel barrier properties. The annealing treatment may be conducted in air, but is preferably performed in an inert gas, such as nitrogen gas.

The PAS resin molded article of the present disclosure has a feature such that it has excellent thermal conductivity and excellent fuel barrier properties, and therefore is particularly preferably used as a fuel system part which is in contact with or immersed in a fuel (the term "fuel" means fossil fuels, such as crude oil, shale oil, shale gas, LNG, gasoline, kerosine, gas oil, and heavy oil, and hydrocarbons, e.g., saturated hydrocarbons, such as n-hexane, isohexane, n-nonane, isononane, dodecane, and isododecane, unsaturated hydrocarbons, such as 1-hexene, 1-heptene, and 1-octene, cyclic saturated hydrocarbons, such as cyclohexane, cycloheptane, cyclooctane, cyclodecane, and decalin, cyclic unsaturated hydrocarbons, such as cyclohexene, cycloheptene, cyclooctene, 1,1,3,5,7-cyclooctatetraene, and cyclododecene, and aromatic hydrocarbons, such as benzene, toluene, and xylene, and the like, and these may be

employed individually or in combination) and a vapor thereof. Specifically, the PAS resin molded article can be advantageously used in fuel system parts for car, such as a fuel tank, a fuel tube, a fuel sensor, a fuel pump, a vane pump, and an auto ratio flow meter. Further, the molded article of the present disclosure can be used not only as a fuel system part but also as a general resin molded article mentioned below. Examples include electric and electronic parts, such as protecting or supporting members for box-type electric or electronic part integrated module, individual semiconductors or modules, a sensor, an LED lamp, a connector, a socket, a resistor, a relay casing, a switch, a coil bobbin, a condenser, a variable condenser casing, an optical pickup, an oscillator, various types of terminal blocks, a transformer, a plug, a printed substrate, a tuner, a loudspeaker, a microphone, a headset, a small-size motor, a magnetic head base, a power module, a terminal block, a semiconductor, a liquid crystal, an FDD carriage, an FDD chassis, a motor brush holder, a satellite dish, and computer-related parts; household and office appliance parts, such as VTR parts, television parts, an iron, a hair dryer, rice cooker parts, microwave oven parts, acoustic parts, sound and picture device parts, e.g., an audio and laser disc, a compact disc, a DVD disc, and a Blu-ray disc, lighting parts, refrigerator parts, air conditioner parts, typewriter parts, word processor parts, and water-related appliance parts, e.g., a water level or temperature sensor for a hot-water supply apparatus and bath; machine-related parts, such as office computer-related parts, telephone-related parts, facsimile-related parts, copying machine-related parts, cleaning jigs, motor parts, a lighter, and a typewriter; optical device- and precision machine-related parts, such as a microscope, a binocular, a camera, and a clock; and automobile- and vehicle-related parts, such as an alternator terminal, an alternator connector, a brush holder, a slip ring, an IC regulator, a potentiometer base for light diya, a relay block, an inhibitor switch, various types of valves, e.g., an exhaust gas valve, fuel-related, exhaust and intake pipes, an air intake nozzle snorkel, an intake manifold, an engine cooling water joint, a carburetor main body, a carburetor spacer, an exhaust gas sensor, a cooling water sensor, an oil temperature sensor, a brake pad wear sensor, a throttle position sensor, a crank shaft position sensor, a temperature sensor, an air flow meter, a brake pad wear sensor, a thermostat base for air conditioner, a heater heated-air flow control valve, a brush holder for radiator motor, a water pump impeller, a turbine vane, wiper motor-related parts, a distributor, a starter switch, an ignition coil and a bobbin thereof, a motor insulator, a motor rotor, a motor core, a starter relay, a wire harness for transmission, a window washer nozzle, an air conditioner panel switch substrate, a coil for fuel-related solenoid valve, a connector for fuse, a horn terminal, an electrical part insulator, a stepping motor rotor, a lamp socket, a lamp reflector, a lamp housing, a brake piston, a solenoid bobbin, an engine oil filter, and an ignition device casing, and the molded article can be applied to other uses.

EXAMPLES

Hereinbelow, the present invention will be described with reference to the following Examples and Comparative Examples, which should not be construed as limiting the scope of the present invention. The "%" and "part(s)" are given by mass unless otherwise specified.

<Examples 1 and 2 and Comparative Examples 1 to 4>

According to the components of the composition and the amounts shown in Table 1, materials were blended. Then, the materials were charged into a vented twin-screw extruder "TEX-30$\alpha$ (product name)", manufactured by The Japan Steel Works, Ltd., and melt-kneaded at a resin component discharge rate of 30 kg/hr, at a screw revolution speed of 200 rpm, and at a resin temperature set to 320°C, obtaining pellets of the resin composition. The glass fiber and carbon fiber were charged from the side feeder (S/T ratio: 0.5), and the other materials were preliminarily uniformly mixed using a tumbler and charged from the top feeder. The obtained pellets of the resin composition were dried in a Geer oven at 140°C for 2 hours, and then subjected to injection molding to prepare various test specimens, and the below-described tests were conducted using the test specimens.

<Evaluation>

(1) Impact strength (notched)

The obtained pellets were fed to an injection molding machine (SE-75D-HP), manufactured by Sumitomo Heavy Industries, Ltd., having a cylinder temperature set at 340°C, and subjected to injection molding using a mold for molding an ISO Type-A dumbbell specimen, which had the mold temperature controlled to be 170°C, obtaining ISO Type-A dumbbell specimens in Examples and Comparative Examples. The test specimen was prepared by injecting the resin from one gate so as not to have a weld portion. A middle portion of the obtained dumbbell specimen was cut into a shape of rod having a length of 80 mm, a width of 10 mm, and a thickness of 4 mm, and notched to obtain a notched impact resistance test specimen, and a Charpy impact test was conducted by the method in accordance with ISO 179-1/1eA to measure an impact strength (kJ/mm$^2$).

(2) Coefficient of linear thermal expansion

A middle portion of an ISO Type-A dumbbell specimen prepared in the same manner as in the item (1) above was cut into a rectangular parallelopiped having a length of 10 mm, a width of 10 mm, and a thickness of 4 mm to obtain a test specimen for coefficient of linear thermal expansion, and a coefficient of linear thermal expansion (1/K) of the test specimen in the direction perpendicular to the resin flow direction was measured by the method in accordance with ISO 11359-2 at a measurement temperature in the range of 20 to 30°C.

(3) Measurement of a thermal conductivity (Xenon flash method)

With respect to each of Examples and Comparative Examples, a test specimen having a shape of cylinder having ø10 mm and a thickness of 2 mm was prepared, and a thermal conductivity (W/m•K) was measured by the method in accordance with JIS R 1611 "Measurement methods of thermal diffusivity, specific heat capacity, and thermal conductivity for fine ceramics by flash method".

(4) Test for swelling by a fuel

The obtained pellets were fed to an injection molding machine (SE-75D-HP), manufactured by Sumitomo Heavy Industries, Ltd., having a cylinder temperature set at 340°C, and subjected to injection molding using a mold for molding an ISO D2 sheet specimen, which had the mold temperature controlled to be 170°C, obtaining ISO D2 sheets in the Examples and Comparative Examples. The test specimen and a fuel (Fuel D: 85 vol% + methanol: 15 vol%) were sealed in an autoclave, and heated to 60°C to fill the autoclave with the fuel vapor, so that the test specimen was exposed to the fuel vapor in this state for 1,000 hours. After gradually cooling to room temperature, a weight change ratio (wt%) to the initial weight of the test specimen was measured. The Fuel D indicates a mixed solution of toluene/isooctane = 33 vol%/67 vol%.

(5) Tensile strength change ratio after swelling by a fuel

The obtained pellets were fed to an injection molding machine (SE-75D-HP), manufactured by Sumitomo Heavy Industries, Ltd., having a cylinder temperature set at 340°C, and subjected to injection molding using a mold for molding an ISO Type-A dumbbell specimen, which had the mold temperature controlled to be 170°C, obtaining ISO Type-A dumbbell specimens in Examples and Comparative Examples. The test specimen was prepared by injecting the resin from two gates so as to have a weld portion. The test specimen and a fuel (Fuel D: 85 vol% + methanol: 15 vol%) were sealed in an autoclave, and heated to 60°C to fill the autoclave with the fuel vapor, so that the test specimen was exposed to the fuel vapor in this state for 450 hours. After gradually cooling to room temperature, a tensile strength (MPa) was measured by the method in accordance with ISO 527-1 and 2, and a strength change ratio to the test specimen which was not exposed to the fuel vapor was determined by calculation.

(6) Dimensional change ratio after swelling by a fuel

An ISO D2 sheet prepared in the same manner as in the item (4) above and a fuel (Fuel D: 85 vol% + methanol: 15 vol%) were sealed in an autoclave, and heated to 60°C to fill the autoclave with the fuel vapor, so that the test specimen was exposed to the fuel vapor in this state for 450 hours. After gradually cooling to room temperature, a dimension of the test specimen in the direction perpendicular to the resin flow direction was measured, and a dimensional change ratio to the test specimen which was not exposed to the fuel vapor was determined by calculation.

[Table 1]

| Raw material | Unit | Example 1 | Example 2 | Comparative Example 1 | Comparative Example 2 | Comparative Example 3 | Comparative Example 4 |
|---|---|---|---|---|---|---|---|
| A-1 | Parts by mass | 100 | 100 | 100 | | 100 | 100 |
| a-2 | Parts by mass | | | | 100 | | |

(continued)

| Raw material | Unit | Example 1 | Example 2 | Comparative Example 1 | Comparative Example 2 | Comparative Example 3 | Comparative Example 4 |
|---|---|---|---|---|---|---|---|
| B-1 | Parts by mass | 73 | 73 | 73 | 73 | | |
| b-2 | Parts by mass | | | | | 50 | 84 |
| C-1 | Parts by mass | 32 | | 91 | 32 | 32 | 31 |
| C-2 | Parts by mass | | 32 | | | | |
| D-1 | Parts by mass | 59 | 59 | | 59 | 59 | 50 |
| Evaluation | | | | | | | |
| Charpy impact strength | $kJ/m^2$ | 6 | 6 | 5 | 6 | 4 | 4 |
| Coefficient of linear expansion | 1/K | $2 \times 10^{-5}$ | $2 \times 10^{-5}$ | $2 \times 10^{-5}$ | $2 \times 10^{-5}$ | $3 \times 10^{-5}$ | $3 \times 10^{-5}$ |
| Thermal conductivity | W/m•K | 3.0 | 4.0 | 0.5 | 3.0 | 3.0 | 3.0 |
| Fuel swell amount | wt% | 0.16 | 0.15 | 0.22 | 0.20 | 0.24 | 0.43 |
| Weld tensile strength change ratio after swelling by fuel | % | 0 | 0 | -5 | -9 | -18 | -26 |
| Dimensional change ratio after swelling by fuel | % | 0.00 | 0.00 | 0.03 | 0.01 | 0.03 | 0.06 |

A-1: PPS Resin (melt viscosity (V6): 16 Pa•s; sodium content: 1,500 ppm; non-Newtonian index: 1.01)
a-2: PPS Resin (melt viscosity (V6): 25 Pa•s; sodium content: 2,500 ppm; non-Newtonian index: 1.07)
B-1: Glass fiber (chopped strand; fiber diameter: 10.5 μm)
b-2: Carbon fiber (chopped strand; fiber diameter: 6 μm)
C-1: Calcium carbonate (average particle diameter ($D_{50}$): 4 μm)
C-2: Talc (average particle diameter ($D_{50}$): 14 μm)
D-1: Graphite (flake form; average particle diameter ($D_{50}$): 58 μm)

From Table 1, it is apparent that, as compared to the samples using the PAS resin compositions in Comparative Examples 1 to 4, the samples using the PAS resin compositions in Examples 1 and 2 achieved excellent effects such

that, while maintaining the thermal conductivity, the samples suppressed the swell amount after immersion in the fuel and reduced the mechanical strength lowering ratio and dimensional change ratio, and further obtained excellent balance between the mechanical strength and the coefficient of linear thermal expansion.

## Claims

**1.** A polyarylene sulfide resin composition comprising a polyarylene sulfide resin (A), a glass fiber (B), a particulate filler (C), and graphite (D) blended as essential components,

wherein the polyarylene sulfide resin (A) has a sodium content in the range of 2,300 ppm or less, and wherein, relative to 100 parts by mass of the polyarylene sulfide resin (A), the amount of the glass fiber (B) is in the range of 10 to 150 parts by mass, the amount of the particulate filler (C) is in the range of from 1 to 120 parts by mass, and the amount of the graphite (D) is in the range of 10 to 130 parts by mass.

**2.** The polyarylene sulfide resin composition according to claim 1, wherein the total amount of the glass fiber (B), the particulate filler (C), and the graphite (D) is in the range of 21 to 400 parts by mass, relative to 100 parts by mass of the polyarylene sulfide resin (A).

**3.** The polyarylene sulfide resin composition according to claim 1 or 2, wherein the particulate filler (C) is calcium carbonate and/or talc.

**4.** The polyarylene sulfide resin composition according to any one of claims 1 to 3, which is a melt-kneaded mixture.

**5.** A molded article which is obtained by melt-molding the polyarylene sulfide resin composition according to any one of claims 1 to 4.

**6.** A method for producing a polyarylene sulfide resin composition, having the step of blending a polyarylene sulfide resin (A), a glass fiber (B), a particulate filler (C), and graphite (D) as essential components, and melt-kneading the resultant mixture at a temperature in the range of the melting point of the polyarylene sulfide resin (A) or higher,

wherein the polyarylene sulfide resin (A) has a sodium content in the range of 2,300 ppm or less, and wherein, relative to 100 parts by mass of the polyarylene sulfide resin (A), the amount of the glass fiber (B) is in the range of 10 to 150 parts by mass, the amount of the particulate filler (C) is in the range of 1 to 120 parts by mass, and the amount of the graphite (D) is in the range of 10 to 130 parts by mass.

**7.** The method for producing a polyarylene sulfide resin composition according to claim 6, wherein the total amount of the glass fiber (B), the particulate filler (C), and the graphite (D) is in the range of 21 to 400 parts by mass, relative to 100 parts by mass of the polyarylene sulfide resin (A).

**8.** The method for producing a polyarylene sulfide resin composition according to claim 6 or 7, wherein the particulate filler (C) is calcium carbonate and/or talc.

**9.** A method for producing a molded article, having the step of melt-molding the polyarylene sulfide resin composition according to any one of claims 1 to 4.

**10.** A method for using a molded article which is obtained by melt-molding the polyarylene sulfide resin composition according to any one of claims 1 to 4 as a fuel system part.

## INTERNATIONAL SEARCH REPORT

International application No.
**PCT/JP2022/004169**

**A. CLASSIFICATION OF SUBJECT MATTER**

***C08K 7/14***(2006.01)i; ***C08L 81/02***(2006.01)i; ***C08J 5/00***(2006.01)i; ***C08K 3/04***(2006.01)i; ***C08K 3/26***(2006.01)i; ***C08K 3/34***(2006.01)i
FI: C08L81/02; C08K7/14; C08K3/04; C08K3/26; C08K3/34; C08J5/00 CEZ

According to International Patent Classification (IPC) or to both national classification and IPC

**B. FIELDS SEARCHED**

Minimum documentation searched (classification system followed by classification symbols)

C08K7/14; C08L81/02; C08J5/00; C08K3/04; C08K3/26; C08K3/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-53350 A (TORAY INDUSTRIES, LTD.) 11 March 2010 (2010-03-11) claims, paragraphs [0012], [0028], [0032], [0037], [0042], [0043], [0070], [0074], [0076]-[0082], examples 2, 3, 5 | 1-10 |
| Y | | 1-10 |
| X | JP 2003-119383 A (TORAY INDUSTRIES, LTD.) 23 April 2003 (2003-04-23) claims, paragraphs [0024], [0029]-[0036], [0044], [0046], examples, comparative examples | 1-10 |
| Y | | 1-10 |
| Y | JP 2016-147956 A (DIC CORP.) 18 August 2016 (2016-08-18) claims, paragraph [0053], examples | 1-10 |
| A | JP 5-171042 A (ASAHI GLASS CO., LTD.) 09 July 1993 (1993-07-09) | 1-10 |
| A | WO 2019/208377 A1 (DIC CORP.) 31 October 2019 (2019-10-31) | 1-10 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 March 2022** | **12 April 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/004169**

| Patent document cited in search report | Publication date (day/month/year) | Patent family member(s) | Publication date (day/month/year) |
|---|---|---|---|
| JP 2010-53350 A | 11 March 2010 | (Family: none) | |
| JP 2003-119383 A | 23 April 2003 | (Family: none) | |
| JP 2016-147956 A | 18 August 2016 | (Family: none) | |
| JP 5-171042 A | 09 July 1993 | (Family: none) | |
| WO 2019/208377 A1 | 31 October 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004339290 A
- JP 2008266616 A
- JP 2004300272 A
- JP 2006045401 A
- WO 2010058713 A